# EUROPÄISCHE PATENTANMELDUNG

(11) **EP 1 422 006 A2**
(43) Veröffentlichungstag der Anmeldung: **26.05.2004**
(21) Anmeldenummer: 03405812.3
(22) Anmeldetag: 14.11.2003
(51) Int. Cl.: B23D 19/08, B21D 28/26

(54) **Blechbearbeitungsmaschine**

(30) Priorität: 22.11.2002 CH 19712002
(71) Anmelder: MABI AG, 5106 Veltheim (CH)
(72) Erfinder: Biland, Max, 5106 Veltheim (CH)
(74) Vertreter: Groner, Manfred

(57) **Zusammenfassung**

Die Blechbearbeitungsmaschine weist eine Schneidvorrichtung (5) mit einem Schneidkopf (6) auf, der quer zur Transportvorrichtung (8) des Bleches (4) verfahrbar ist. Eine Stanzvorrichtung (13) dient zum Stanzen des Bleches (4). Mit einer steuerbaren Transportvorrichtung (29) mit wenigstens einem Rollenpaar (25, 26) wird das Blech (4) transportiert. Es sind zwei im Abstand zueinander angeordnete Rollenpaare (25, 26) vorgesehen. Ein erstes Rollenpaar (25) ist in Transportrichtung (8) gesehen vor dem Werkzeug (15, 17) der Stanzvorrichtung (13) und ein zweites Rollenpaar (26) nach dem Werkzeug (15, 17) der Stanzvorrichtung (13) angeordnet. Die Schneidvorrichtung (5) und die Stanzvorrichtung (13) sind unabhängig voneinander quer zur Transportrichtung (8) verfahrbar.

## Beschreibung

Die Erfindung betrifft eine Blechbearbeitungsmaschine mit einem Tisch, einer Schneidvorrichtung mit einem Schneidkopf, der quer zur Transportrichtung des Bleches verfahrbar ist, einer Stanzvorrichtung zum Stanzen des Bleches und einer steuerbaren Transportvorrichtung mit wenigstens einem Rollenpaar, mit dem das Blech für den Transport klemmbar ist.

Eine Blechbearbeitungsmaschine der genannten Art ist durch die CH 689 689 A5 des Anmelders bekannt geworden. Bei dieser wird das zu bearbeitende Blech ab einer Rolle abgezogen und mittels einer Transportvorrichtung einem Blechschneidkopf zugeführt. Mit der Transportvorrichtung wird das Blech für den Formschnitt vorwärts und rückwärts bewegt. Gleichzeitig wird der Schneidkopf der Schneidvorrichtung quer zur Transportrichtung hin- und herverfahren. Eine Walzeinrichtung, die vor dem Schneidkopf angeordnet ist, richtet das Blech und bewegt dieses programmgesteuert vorwärts und rückwärts. Die Schneidvorrichtung ist fest mit einem Stanzwerkzeug verbunden, das insbesondere für Reihenloch-Stanzungen vorgesehen ist.

Die EP 0 620 072 A1 des Anmelders zeigt ebenfalls eine Blechbearbeitungsmaschine, bei welcher an einem Portalrahmen ein Schlitten mit einer Schneid- und einer Stanzvorrichtung angeordnet sind. Auch hier sind die Schneidvorrichtung und die Stanzvorrichtung fest miteinander verbunden. Die Vorrichtung dient zur Dünnblechbearbeitung und insbesondere zur Herstellung von Isolierformen.

Die EP 0 593 964 A1 des Anmelders zeigt eine Bleichschneidemaschine, bei welcher die Schneidvorrichtung ein Schneidwerkzeug aufweist, das zwei angetriebene Kreismesser besitzt.

Der Erfindung liegt die Aufgabe zugrunde, eine Blechbearbeitungsmaschine der genannten Art zu schaffen, die eine noch höhere Präzision ermöglicht.

Die Aufgabe ist bei einer gattungsgemässen Blechbearbeitungsmaschine dadurch gelöst, dass zwei Rollenpaare vorgesehen sind, wobei ein erstes Rollenpaar in Transportrichtung gesehen vor dem Werkzeug der Stanzvorrichtung und ein zweites Rollenpaar nach dem Werkzeug der Stanzvorrichtung angeordnet ist und dass der Schneidkopf und das Stanzwerkzeug unabhängig von einander gesteuert verfahrbar sind. Bei der erfindungsgemässen Blechbearbeitungsmaschine ist das Blech vor und nach dem Stanzwerkzeug sowie zwischen dem Stanzwerkzeug und dem Schneidkopf durch die genannten Rollenpaare geführt. Zum Stanzen ist der zu bearbeitende Blechbereich somit zwischen zwei Rollenpaaren angeordnet und dadurch wird eine hohe Stabilität des Bleches beim Stanzen erreicht. Da das Schneidwerkzeug unabhängig vom Stanzwerkzeug ist, kann der Schneidkopf vergleichsweise nahe an einem Rollenpaar angeordnet werden. Dadurch wird das Blech für den Schneidvorgang stabilisiert.

Eine besonders hohe Präzision ergibt sich dann, wenn gemäss einer Weiterbildung der Erfindung die beiden Rollenpaare unmittelbar vor bzw. nach dem Werkzeug der Stanzvorrichtung angeordnet sind.

Wenigstens ein Stanzwerkzeug ist auf einem quer zur Transportvorrichtung verfahrbaren Schlitten gelagert. Vorzugsweise sind der Stempel und die Matrize auf separaten Schlitten gelagert.

Nach einer Weiterbildung der Erfindung weist die Stanzvorrichtung einen Druckbalken auf, der sich quer zur Transportrichtung erstreckt und der zur Betätigung des Stanzwerkzeuges vertikal bewegbar ist. Dadurch ist ein Stanzen mit mehreren Stempeln möglich. Beim Senken des Druckbalkens werden damit gleichzeitig mehrere Stempel betätigt. Durch ein solches Reihenlochstanzen kann die Leistung wesentlich erhöht werden.

Nach einer Weiterbildung der Erfindung ist der Druckbalken an seinen beiden Enden jeweils mit einem Exzenter verbunden, mit dem der Druckbalken vertikal bewegbar ist. Dies ermöglicht ein besonders kostengünstiges und zugleich ein präzises und schnelles Stanzen.

Weitere vorteilhafte Merkmale ergeben sich aus den abhängigen Patentansprüchen, der nachfolgenden Beschreibung sowie der Zeichnung.

Ein Ausführungsbeispiel der Erfindung wird nachfolgend anhand der Zeichnung näher erläutert. Es zeigen:
- Figur 1: schematisch eine räumliche Ansicht einer erfindungsgemässen Blechbearbeitungsmaschine, wobei aus zeichnerischen Gründen Abdeckungsteile weggelassen sind,
- Figur 2: eine weitere schematische Ansicht der erfindungsgemässen Blechbearbeitungsmaschine,

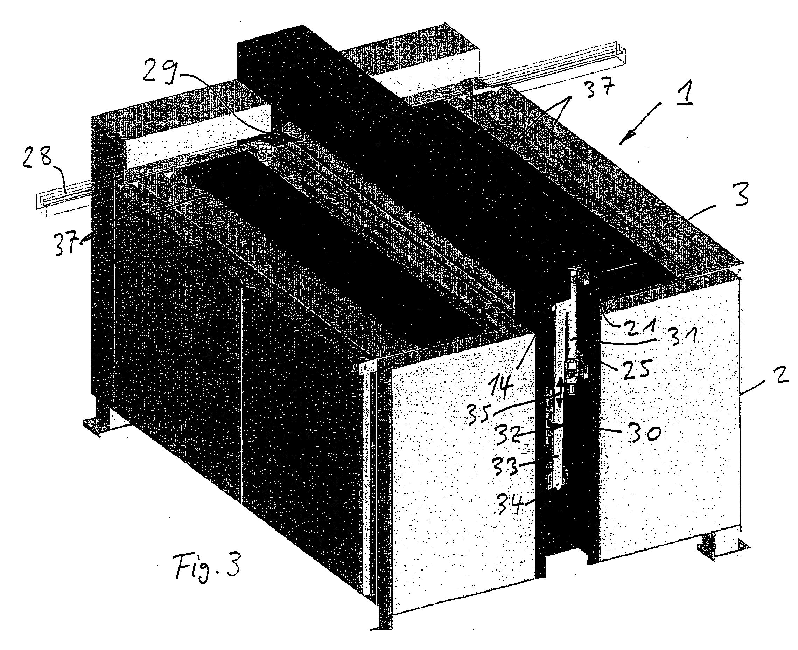

- Figur 3: schematisch eine räumliche Ansicht der erfindungsgemässen Blechbearbeitungsmaschine und
- Figur 4: schematisch eine räumliche Ansicht des Schneidkopfes.

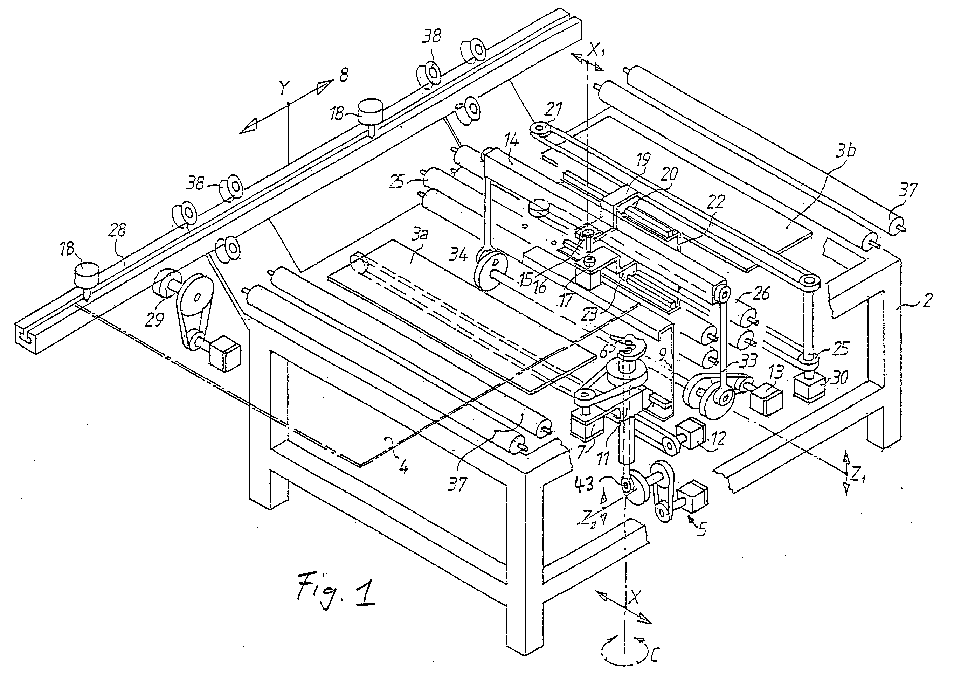

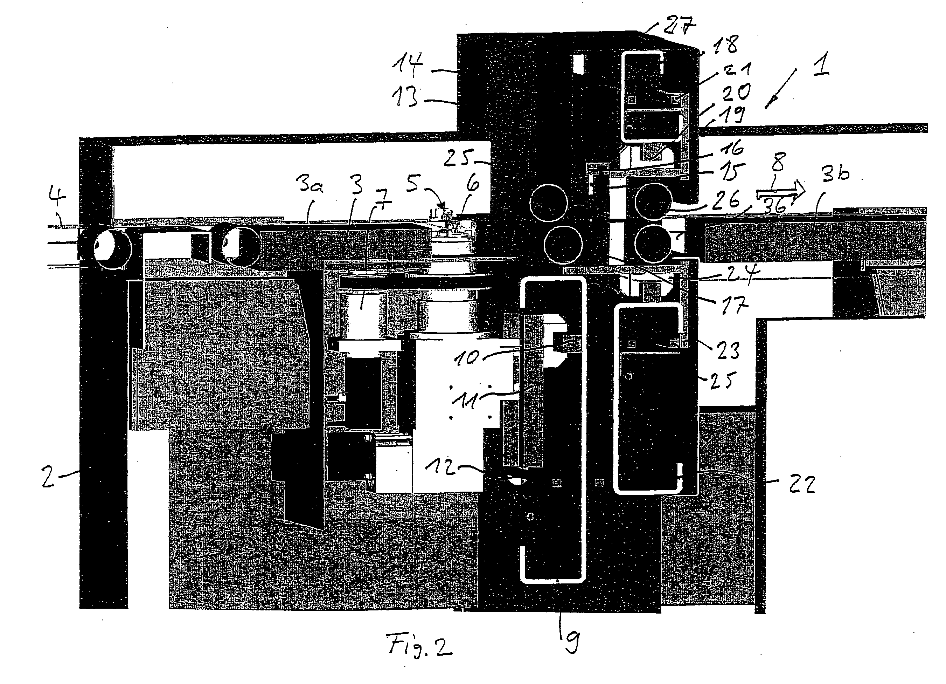

Die Blechbearbeitungsmaschine 1 weist einen an einem Maschinengestell 2 gelagerten Tisch 3 auf, der gemäss den Figuren 1 und 2 zwei im Abstand zueinander angeordnete Tischteile 3a und 3b aufweist. Zwischen diesen Tischteilen 3a und 3b sind in einem Zwischenraum 36 eine Schneidvorrichtung 5 sowie eine Stanzvorrichtung 13 gelagert. Zudem befinden sich im Zwischenraum 36 zur Führung und Stabilisierung eines Bleches 4 ein erstes Rollenpaar 25 sowie ein zweites Rollenpaar 26. Diese Rollenpaare 25 und 26 sind vorzugsweise nicht angetrieben und pressen auf das Blech 4. Die Transportrichtung des Bleches 4, das vorzugsweise von einer hier nicht gezeigten Rolle abgezogen wird, ist in Figur 2 mit dem Pfeil 8 angedeutet. Das Blech 4 wird in den Figuren 1 und 2 somit von links nach rechts bewegt. Zur Führung des Bleches 4 können gemäss Figur 1 am Maschinengestell noch weitere nicht angetriebene Walzen oder Rollen 37 angeordnet sein.

Der Vorschub des Bleches 4 erfolgt mit einer Schiene 28, die an Rollen 38 verschieblich geführt ist und auf der das Blech 4 mit Klemmelementen 18 fixierbar ist. Mit einem Antrieb 29 kann die Schiene 28 in Längsrichtung verschoben werden.

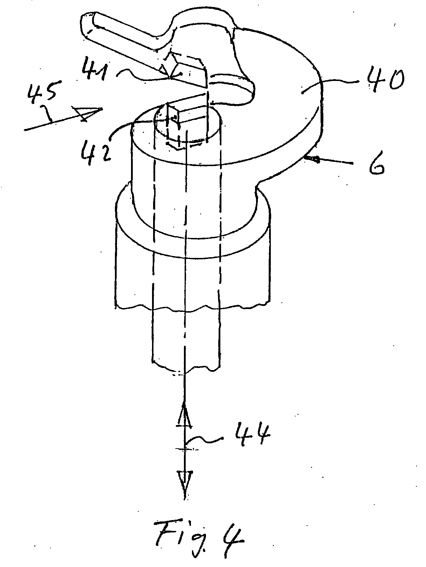

Wie die Figur 4 zeigt, weist der Schneidkopf 6 einen Schneidtisch 40 auf, an dem ein oberes und auswechselbares Messer 41 befestigt ist. Ein unteres und ebenfalls auswechselbares Messer 42 ist mit einem Exzenter 43 in den Richtungen des Doppelpfeils 44 vertikal bewegbar. Hierbei wird das in Richtung des Pfeils 45 eintretende Blech 4 zwischen den beiden Messern 41 und 42 geschnitten. Mit einem Antrieb 7 ist der Schneidkopf 6 um seine vertikale Achse drehbar.

Die Schneidvorrichtung 5 weist den in Figur 4 gezeigten Schneidkopf 6 auf, mit dem das Blech 4 von der Unterseite gesteuert geschnitten werden kann und der auf einem Schlitten 11 gelagert ist. Wie die Figur 4 zeigt, weist der Schneidkopf 6 einen Schneidtisch 40 auf, an dem ein oberes und auswechselbares Messer 41 befestigt ist. Ein unteres und ebenfalls auswechselbares Messer 42 ist mit einem Exzenter 43 in den Richtungen des Doppelpfeils 44 vertikal bewegbar. Hierbei wird das in Richtung des Pfeils 45 eintretende Blech 4 zwischen den beiden Messern 41 und 42 geschnitten. Mit einem Antrieb 7 ist der Schneidkopf 6 um seine vertikale Achse drehbar. Der Schlitten 11 ist an einer Führungsschiene eines Trägers 9 gelagert und kann quer zur Transportrichtung 8 ebenfalls gesteuert verfahren werden. Mit der Schneidvorrichtung 5 können aus dem Blech 4 in an sich bekannter Weise Formteile, beispielsweise Isolierformen herausgeschnitten werden. Der Schlitten 11 ist über die gesamte Breite des Tisches 3 verfahrbar, sodass das Blech 4 ebenfalls über seine gesamte Breite geschnitten werden kann. Beim Schneidvorgang kann das Blech 4 vorwärts als auch rückwärts bewegt werden.

Isolierformen werden in der Regel mit Lochreihen versehen. Diese Lochreihen werden mit der Stanzvorrichtung 13 hergestellt, die ebenfalls über die gesamte Breite des Tisches 3 quer zur Transportrichtung verfahrbar ist. Die Stanzvorrichtung weist wenigstens einen Stempel 15 auf, der mit einer Matrize 17 zusammenarbeitet. Vorzugsweise sind der Stempel 15 und die Matrize 17 auswechselbar. Zwischen dem Stempel 15 und der Matrize 17 wird das Blech 4 hindurchgezogen. In der Figur 2 ist lediglich ein Stempel 15 sichtbar. Vorzugsweise ist lediglich ein Stempel 15 an einem Träger 16 gelagert. Dieser Träger 16 erstreckt sich quer zur Transportrichtung über die ganze Breite des Tisches 3 und ist fest mit einem Schlitten 19 verbunden. Der Schlitten 19 ist mit einem Lager 20 an einem gestellfesten Träger 22 gelagert. Mit einem endlosen Antriebsorgan 31, beispielsweise einer Kette oder einem Zahnriemen wird der Schlitten 19 quer zur Transportrichtung bewegt. Dazu ist das endlose Antriebsorgan 21 gemäss Figur 1 um eine Welle 31 gelegt, die von einem Antrieb 30 angetrieben wird.

Über dem Stempelhalter 16 ist ein Druckbalken 14 angeordnet, der sich ebenfalls über die ganze Breite des Tisches 3 erstreckt. Der Druckbalken 14 ist am Maschinengestell 2 vertikal verstellbar gelagert. In der Ruhestellung befindet sich dieser Druckbalken 14 etwas über dem Stempelhalter 16, sodass der Stempelhalter 16 unabhängig vom Druckbalken 14 verfahrbar ist. Zum Stanzen wird der Druckbalken 14 nach unten bewegt. Hierzu ist an den beiden Enden des Druckbalkens 14 jeweils ein Exzenter 32 angeordnet, wie die Figur 1 erkennen lässt. Dieser Exzenter besitzt eine nach unten ragende Stange 33, die an ihrem oberen Ende fest mit dem Druckbalken 14 und am unteren Ende mit einer exzentrischen Welle 34 verbunden ist. Beim Drehen der Welle wird die Stange 33 in Richtung des Pfeiles 35 nach oben und nach unten bewegt. Entsprechend führt der Druckbalken 14 Bewegungen nach unten und nach oben aus. Da an beiden Enden des Druckbalkens 14 jeweils ein Exzenter 34 angeordnet ist, ist der Druckbalken 14 in jeder Stellung parallel zum Stempelhalter 16 ausgerichtet. Dadurch sind schnelle Bewegungen mit vergleichsweise einfachem konstruktivem Aufwand möglich.

Die Matrize 17 erstreckt sich ebenfalls über die gesamte Länge des Tisches 3 und ist auf einem Schlitten 23 befestigt, der auf einem im Querschnitt C-förmigen gestellfesten Träger 22 gelagert ist. Der Schlitten 23 kann ebenfalls über die gesamte Länge des Tisches 3 verfahren werden. Hierzu ist der Schlitten 23 mit einem endlosen Antriebsorgan 25 verbunden, das ebenfalls von der Well 31 angetrieben ist. Da die beiden endlosen Antriebsorgane 21 und 25 von der gleichen Welle 31 angetrieben sind, werden entsprechend die beiden Schlitten 19 und 23 synchron zueinander bewegt. Der Stempel bzw. die Stempel 15 werden damit gleichzeitig mit der Matrize 17 bewegt.

Wie ersichtlich sind die Schneidvorrichtung 5 und die Stanzvorrichtung 13 unabhängig voneinander bewegbar. Die Stanzvorrichtung 13 ist unmittelbar zwischen dem ersten Rollenpaar 25 und dem zweiten Rollenpaar 26 angeordnet. Die Distanz zwischen den beiden Rollenpaaren 25 und 26 ist möglichst kurz gehalten. Dadurch kann das Blech 4 im Bereich der Stanzvorrichtung 13 sehr stabil geführt werden. Dadurch ist eine sehr präzise Stanzung möglich. Die Schneidvorrichtung 5 befindet sich ebenfalls unmittelbar vor dem ersten Rollenpaar 25. Dadurch wird das Blech 4 im Bereich des Schneidkopfes 6 über die gesamte Breite des Tisches 3 stabilisiert. Dadurch ist ein sehr präziser Schnitt möglich.

## Patentansprüche

1. Blechbearbeitungsmaschine mit einem Tisch (3), einer Schneidvorrichtung (5) mit einem Schneidkopf (6), der quer zur Transportrichtung (8) des Bleches (4) verfahrbar ist, einer Stanzvorrichtung (13) zum Stanzen des Bleches (4) und einer steuerbaren Transportvorrichtung (29) mit wenigstens einem Rollenpaar (25, 26), mit dem das Blech (4) für den Transport klemmbar ist, **dadurch gekennzeichnet, dass** zwei im Abstand zueinander angeordnete Rollenpaare (25, 26) vorgesehen sind, wobei ein erstes Rollenpaar (25) in Transportrichtung (8) gesehen vor dem Werkzeug (15, 17) der Stanzvorrichtung (13) und ein zweites Rollenpaar (26) nach dem Werkzeug (15, 17) der Stanzvorrichtung (13) angeordnet sind und dass die Schneidvorrichtung (5) und die Stanzvorrichtung (13) unabhängig voneinander quer zur Transportrichtung (8) verfahrbar sind.

2. Maschine nach Anspruch 1, **dadurch gekennzeichnet, dass** die beiden Rollenpaare (25, 26) unmittelbar vor bzw. nach dem Werkzeug (15, 17) der Stanzvorrichtung (13) angeordnet sind.

3. Maschine nach Anspruch 1 oder 2, **dadurch gekennzeichnet, dass** die Stanzvorrichtung (13) in Transportrichtung (8) gesehen nach der Schneidvorrichtung (5) angeordnet ist.

4. Maschine nach einem der Ansprüche 1 bis 3, **dadurch gekennzeichnet, dass** die Stanzvorrichtung (13) wenigstens einen Schlitten (19, 23) aufweist, der quer zur Transportrichtung (8) verfahrbar ist.

5. Maschine nach Anspruch 4, **dadurch gekennzeichnet, dass** die Stanzvorrichtung (13) zwei übereinander angeordnete Schlitten 19, 23) aufweist, wobei an dem einen Schlitten (19) Stempel (15) und am anderen Schlitten (23) eine Matrize (17) gelagert sind.

6. Maschine nach Anspruch 5, **dadurch gekennzeichnet, dass** die Stanzvorrichtung (13) mehrere in einer Reihe angeordnete Stempel (15) aufweist.

7. Maschine nach einem der Ansprüche 1 bis 6, **dadurch gekennzeichnet, dass** die Stanzvorrichtung (13) einen Druckbalken (14) aufweist, der sich quer zur Transportrichtung (8) erstreckt und der zum Stanzen vertikal bewegbar ist.

8. Maschine nach Anspruch 7, **dadurch gekennzeichnet, dass** der Druckbalken (14) an seinen beiden Enden mit einem Antrieb verbunden ist.

9. Maschine nach Anspruch 8, **dadurch gekennzeichnet, dass** der Druckbalken (14) an seinen beiden Enden jeweils mit einem Exzenter (34) verbunden ist, mit dem der Druckbalken (14) vertikal bewegbar ist.

10. Maschine nach einem der Ansprüche 1 bis 9, **dadurch gekennzeichnet, dass** die Schneidvorrichtung (5) unterhalb der Ebene des Bleches (4) und der bzw. die Stempel (15) über der Ebene des Bleches (4) angeordnet ist bzw. sind.
